# EUROPEAN PATENT SPECIFICATION

(11) **EP 0 307 915 B1**
(45) Date of publication and mention of the grant of the patent: **11.01.1995**
(21) Application number: 88115147.6
(22) Date of filing: 15.09.1988
(51) Int. Cl.: C08B 11/193, C09D 7/12

(54) **Carboxymethyl hydrophobically modified hydroxyethylcellulose (cmhmhec) and use of cmhmhec in protective coating compositions**
Hydrophobisch modifizierte Carboxymethylhydroxyäthylcellulose (CMHMHEC) und Verwendung in Schutzfarben
Ether carboxymithyle d'hydroxyéthylcellulose rendue hydrophobe (CMHMHEC) et utilisation de CMHMHEC dans des peintures pour revêtement protecteur

(30) Priority: 17.09.1987 US 97777
(43) Date of publication of application: 22.03.1989
(73) Proprietor: AQUALON COMPANY, Wilmington Delaware 19850-5417 (US)
(72) Inventor: Reid, Albert, R., Kenneth City Florida 33709 (US); Royce Jr., Richard D., Longmeadow Massachusetts 01106 (US)
(74) Representative: Lederer, Franz, Dr.

(56) References cited:
- EP-A- 0 210 747
- DE-A- 3 004 161
- GB-A- 670 672

## Description

This invention relates to water-soluble derivatives of cellulose ethers that are useful as thickeners in aqueous compositions such as water-based protective coating compositions, and to aqueous compositions containing the cellulose ether derivatives as thickeners and protective colloids.

Water-based protective coating compositions in which cellulose ether derivatives are conventionally used include latex paints or dispersion paints, of which the principal ingredients are film-forming latices such as styrenebutadiene copolymers, vinyl acetate polymers and copolymers, and acrylic polymers and copolymers. Typically they also contain opacifying pigments, dispersing agents and water-soluble protective colloids, the proportions being, by weight of the total composition, about 10 parts to about 50 parts of a latex, about 10 parts to about 50 parts of an opacifying pigment, about 0.1 part to about 2 parts of a dispersing agent, and about 0.1 part to about 2 parts of a water-soluble protective colloid.

Water-soluble protective colloids conventionally used in the manufacture of latex paints (to stabilize the latices and maintain the wet edge of a painted area longer in use), include casein, methyl cellulose, hydroxyethyl cellulose (HEC), sodium carboxymethyl cellulose, polyvinyl alcohol, starch, and sodium polyacrylate. These colloids have disadvantages: the natural-based ones such as the cellulose ethers may be susceptible to biological degradation and frequently impart poor flow and levelling properties, while the synthetic materials such as polyvinyl alcohol often lack enough thickening efficiency to maintain sag resistance. GB-B-670 672 discloses water soluble carboxy-alkyl hydroxy-alkyl cellulose ethers, wherein the anhydro glucose unit is substituted by only one type of hydroxy alkyl substituent, preferably by the hydroxyethyl group.

The thickening efficiency of HEC is increased by increasing its molecular weight, but that requires the use of more expensive cellulose furnishes such as cotton linters in lieu of the more common wood pulp, and latex paints containing high molecular weight HEC tend to splatter. Nonionic water-soluble cellulose ether derivatives that have been hydrophobically modified by attaching a long chain alkyl group (a hydrophobe) are known to have greater thickening efficiency than the corresponding unmodified versions (for instance from U.S. Patent No. 4,228,277), so that a smaller amount may be used to achieve the same degree of viscosity, and modified lower molecular weight cellulose ether derivatives can be substituted for higher molecular weight unmodified equivalents. DE-A-3004161 describes nonionic cellulose ethers, which are not substituted by the carboxymethyl group.

Also, the lower molecular weight cellulose ether derivatives, in particular low molecular weight hydrophobically modified hydroxyethyl cellulose (HMHEC), reduce or eliminate the splattering problem. However, HMHEC having higher levels of modifying hydrophobe, for example on the order of 0.7-1.0 weight percent of a C₁₆ hydrophobe and approximately 4% with a C₈ hydrophobe, tend to produce darker shades when subjected to increased shear, believed to be the result of interactions between hydrophobe and pigment. Also, when the hydrophobe content is greater that 1.0% such HMHEC tends to be insoluble. Accordingly, commercial HMHECs are normally produced using about 0.4 to about 0.6 weight percent of C₁₆ hydrophobes, although HMHEC having higher levels of hydrophobe would be more efficient and the need to maintain the hydrophobe content within such a narrow range causes manufacturing difficulties.

Hence, there is a need for a protective colloid that is easy to produce, that is an efficient thickener or viscosifier with high resistance to biological degradation, and that provides a latex paint with good flow and leveling properties without discoloration.

According to the invention, a water-soluble cellulose ether derivative that has attached to it a long-chain alkyl group as a hydrophobic modifier is characterized in that the cellulose ether derivative is an anionic carboxymethyl hydroxyethyl derivative, the carboxymethyl degree of substitution is from 0.05 to 0.5 and the long-chain alkyl group is a long chain alkyl, alphahydroxyalkyl, or acyl group having 8 to 25 carbon atoms and represents in the polymer structure a proportion by weight of the total cellulose polymer of from 0.10 to 4.0%.

The term "long chain hydrocarbon group", is used generically to include not only simple long-chain alkyl, but also the substituted alphahydroxyalkyl and acyl groups having 8 to 25 carbon atoms, since the size and effect of the hydrocarbon part of the group substantially obscure any noticeable effect from the substituent group.

The polymers of this invention contain carboxymethyl groups, hydroxyethyl groups, and long chain hydrophobic modifiers and are often described as carboxymethyl hydrophobically modified hydroxyethyl cellulose (CMHMHEC).

The carboxymethyl degree of substitution (C.M.D.S.) is the average number of carboxymethyl groups per anhydroglucose unit of the cellulose molecule. The polymers of this invention have a C.M.D.S. of from 0.05 to 0.5, and even more preferably about 0.05 to about 0.2.

Hydroxyethyl molar substitution (H.E.M.S.) refers to the average number of moles of hydroxyethyl group per anhydroglucose unit of the cellulose molecule.

The polymers of this invention have an H.E.M.S. of 2.5 to 4.5.

The long chain hydrocarbon group of this invention preferably has 8 to 18 carbon atoms and represents a proportion by weight of the fully substituted cellulose polymer of from about 0.2 to 2.5%.

The cellulose ether derivatives of this invention have a Brookfield LVF Viscosity in the range of 5 to 60,000 m Pa.s (centipoise) in a 1% solution by weight, as measured conventionally using a Brookfield Synchro-Lectric Model LVF Viscometer at 6 rpm.

The cellulose ether derivatives of this invention can be prepared from any nonionic water-soluble hydroxyethyl cellulose polymers that are conventionally available, or directly from a cellulose furnish. The amount of the nonionic hydroxyethyl substituent does not appear to be critical so long as there is sufficient amount to insure that the ether is water soluble. Preferably a hydroxyethyl cellulose substrate has a molecular weight of about 50,000 to 400,000.

The substrates can be prepared by treating a cellulose furnish by known methods, such as by treating wood pulp or chemical cotton with alkylene oxide in an alkaline medium. Typically the cellulosic furnish will have a degree of polymerization (D.P.) of from about 1300 to about 2300. The cellulose ethers of this invention can be prepared by modifying the cellulose furnish with the substituent groups in any order. Preferably the synthesis is carried out by first hydroxyalkylating the cellulose furnish, then attaching the hydrophobic modifier, and finally carboxymethylating the product.

Methods of preparing water-soluble cellulose ethers, such as hydrophobically modified hydroxyethyl cellulose, are well known, for instance from U.S. Patent No. 4,228,277. The nonionic cellulose ether is slurried in an inert organic diluent such as a lower aliphatic alcohol, ketone, or hydrocarbon and a solution of alkali metal hydroxide is added to the slurry at a low temperature, for instance at 10 to 35 degrees C. After the ether is thoroughly wetted and swollen by the alkali, the hydrocarbon modifier is attached, for instance by using a halide or halohydride, an epoxide, or an acid anhydride or acyl chloride, with the appropriate number of carbon atoms. According to the method of attachment, the modifier is respectively a simple long-chain alkyl group, an alpha-hydroxyalkyl radical, or an acyl radical providing an ester linkage. Preferably, the ether linkage using an epoxide is used. The reaction is continued, with agitation, until complete. The residual alkali is then neutralized and the product is recovered, washed with inert diluents, and dried.

According to the invention, a process for making a water-soluble hydroxyethyl cellulose ether derivative in which a long-chain alkyl group containing halide or halohydride, an epoxide, or an acid anhydride or acyl chloride reactant group is reacted with a hydroxyethyl cellulose ether, is characterized in that the alkyl group has from 8 to 25 carbon atoms, and the product of the reaction is carboxymethylated to a carboxymethyl degree of substitution of 0.05 to 0.5 .

Methods for the carboxymethylation of cellulose ethers are well-known, for instance from U.S. Patent 2,517,577 or pages 937-949 of Volume 2 of High Polymers (E. Ott et al. Eds., 2nd Ed. 1954).

The preparation of the water-soluble cellulose ether derivatives of this invention is illustrated in the following preparation example.

### PREPARATION EXAMPLE

This example shows preparation of a carboxymethyl hydrophobically modified hydroxyethyl cellulose and is representative of Preparation of all of the cellulose ether derivatives of this invention.

Chemical cotton (17.4 g), sodium hydroxide (6.9 g, 0.173 moles), water (28 g), tert-butanol (145 g), and acetone (9 g) were charged into a 500-ml glass reactor fitted with a multiported stainless steel head and stirrer assembly. Oxygen was removed by repeated vacuum/nitrogen purge. The resulting alkali cellulose was stirred 45 minutes at 25°C. Then ethylene oxide (9.0 g, 0.204 moles) was added and the temperature raised over 30 minutes to 55°C and held at 55°C for 45 minutes. A second increment of ethylene oxide (13.5 g, 0.295 mole) and cetyl bromide (4.3 g, 0.0142 mole) was added and the temperature raised from 55°C to 70°C over 30 minutes and held at 70°C for 45 minutes. The temperature was then raised to 95°C and held at 95°C for 150 minutes. The reaction was cooled to 70°C and monochloroacetic acid (4.1 g, 0.043 mole) dissolved in 10-ml of tert-butanol was added. The temperature was held at 70°C for 60 minutes. The mixture was then cooled to 25°C and poured into a stainless steel beaker. Neutralization was accomplished by the addition of 7.8 g of 70 wt % nitric acid and 0.5 g of acetic acid to achieve a slurry pH of between 8 and 9. The slurry was filtered and washed six times with 550-ml portions of 15 wt % aqueous acetone and twice with 100% acetone. The product was dried on a rotary evaporator and 29.8 g of CMHMHEC was obtained as a fine white powder with the following analysis: H.E.M.S.=2.7, C.M.D.S.=0.2, wt. % C₁₆H₃₃=0.7 (based on the weight % of the total HMMEC). The Brookfield LVF Viscosity was measured conventionally using a Brookfield Synchro-Lectric Model LVF Viscometer at 6 rpm.

The cellulose ethers of this invention are useful as thickeners in latex paint, in essentially the same manner as described with respect to use of hydrophobically modified cellulose ethers in U.S. Patent No. 4,228,277, cited above.

The viscosifying effect of a CMHMHEC depends on the backbone used, molecular weight, C.M.D.S., H.E.M.S., hydrophobe length, and amount of hydrophobe, etc. Further, the amount of the CMHMHEC used determines viscosity. CMHMHEC may be added in any amount sufficient to modify viscosity to the desired degree. Preferably, the total amount of CMHMHEC will be in the range of about 0.1 to about 2.0%, preferably 0.5% to 1.0%, based on the weight of the total protective coating, e.g., latex paint.

Molecular weight is generally directly related to viscosifying effect with higher molecular weight CMHMHECs imparting greater viscosity than similar low molecular weight CMHMHECs. Molecular weight may be determined by extrapolation from the degree of polymerization. The molecular weight of the CMHMHEC can be varied by degradation or depolymerization by any conventional means such as treatment with peroxide, to obtain the desired molecular weight, either before or after substitution with the hydroxyethyl, carboxymethyl and hydrophobic groups.

The solution viscosity may be further controlled through use of surfactants. Neutral or nonionic surfactants interact with the hydrophobic groups to increase solution viscosity. Cationic surfactants interact with the anionic carboxymethyl groups to form higher molecular weight complexes (ionic complexes) that lead to increased solution viscosity.

The following examples illustrate the invention. All percentages, etc., are by weight unless otherwise stated.

### Examples 1-30

Examples 1-30 were conducted to demonstrate the use of this invention. Examples 1, 5, 9, 13, 17, 21, 26, 28 and 30 are comparative examples directed to use of noncarboxymethylated cellulose derivatives, i.e., HMHEC. Example 23 is a comparative example directed to a non-hydrophobically modified carboxymethyl hydroxyethyl cellulose (CMHEC).

HMHEC, CMHMHEC and CMHEC were dispersed in pure water and sodium salt solution, and their viscosity was determined using a Brookfield Synchro-Lectric Model LVF Viscometer at 6 rpms and 1% polymer concentration.

The pH was varied by adding acidic or basic solutions of sufficiently high strength so that only a few drops had to be added to attain the desired pH. Accordingly, the pH was modified without significantly affecting the concentration of cellulose ether derivative in the solution.

Results are shown in Table 1.

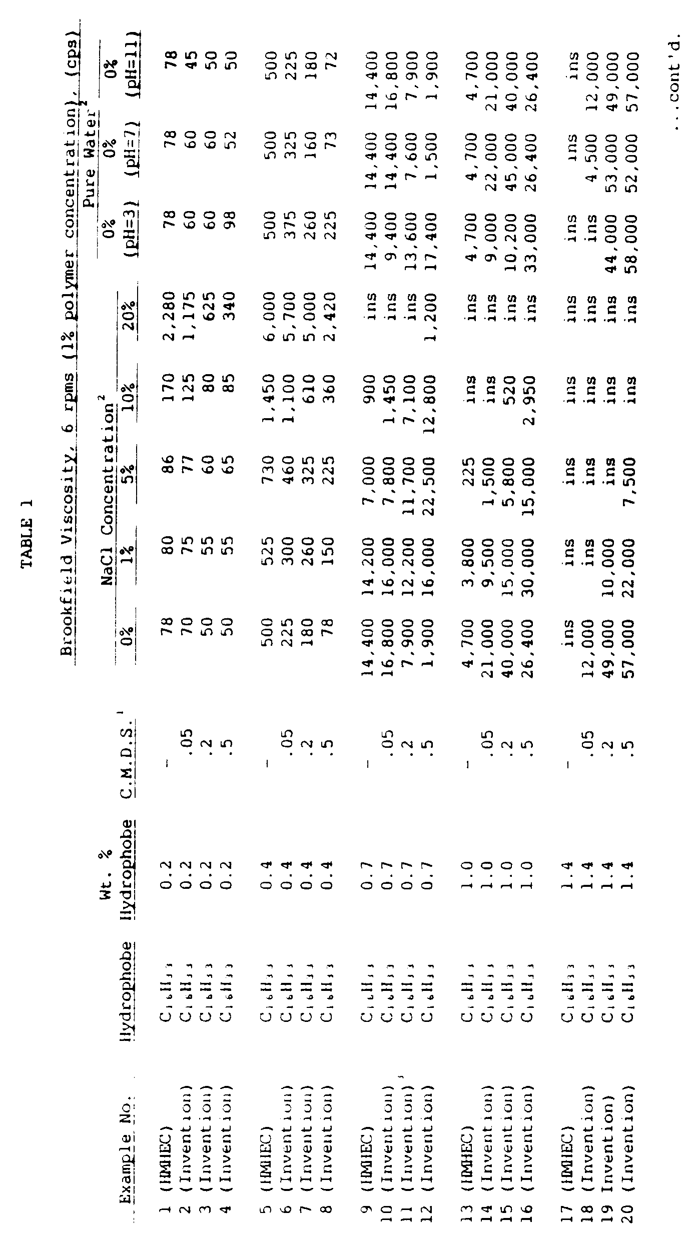

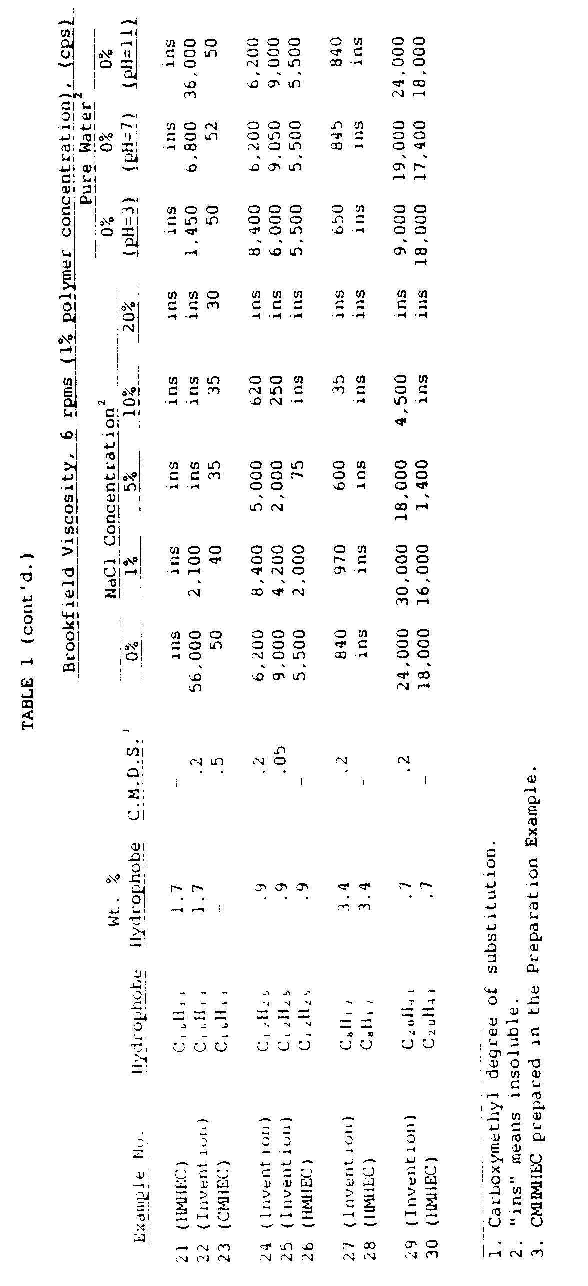

The products of this invention are associated with a number of unexpected effects. Aqueous solution behavior is dependent on both the hydrophobe and carboxymethyl content of the polymer. When a series of HMHECs (varying CM levels) is completely soluble in the medium, carboxymethylation of that sample results in a lowering of viscosity proportional to the C.M.D.S. On the other hand, at higher hydrophobe levels and higher salt levels where solubility is often not complete, increasing carboxymethyl levels result in increased solubility and thus, higher viscosity. This is significant since many water-insoluble HMHECs are rendered fully water-soluble and highly viscosifying with only a small C.M.D.S. For instance, compare examples 17-19 and 21-22. Thus, as demonstrated in the examples, materials of high hydrophobe level, which are normally of little utility in water-based systems, may be rendered water-soluble by carboxymethylation.

The above examples also show that the aqueous solution viscosities of these materials are also pH dependent, depending on both the hydrophobe and carboxymethyl level of the polymer. Fully water-soluble materials have increased viscosity at lower pH (examples 13-14), whereas materials of lesser solubility exhibit increased viscosity at higher pH (examples 14, 15, 18 and 22).

In addition, increasing salt (sodium chloride) concentration results in increasing viscosity so long as the materials remain fully soluble. Higher salt concentrations do, however, reduce the solubility of highly hydrophobic materials and a loss of viscosity will result in those cases.

### Examples 31-35

These examples compare latex paints prepared with the hydrophobically modified hydroxyethyl cellulose polymers of the invention with various conventional paint mixtures.

An acrylic paint (semigloss interior white Paint based on Rhoplex™ AC-417 acrylic latex from Rohm & Haas Co., Philadelphia, Pennsylvania) was made as follows.

The following were ground at high speed (Cowles) for 20 minutes.

| Material | Weight Ratio | Comments |
|---|---|---|
| Propylene Glycol | 80.0 | - |
| Tamol SG-1 (Rohm & Haas Co.) | 8.5 | Dispersant |
| Deefo 495 (Ultra Adhesives) | 2.0 | Antifoamer |
| Ti-Pure R-901 | 240.0 | Opacifying Agent |
| Silica 1160 | 25.0 | - |

Then, the resultant slurry was pumped into a let-down tank, the following were added, and the resultant slurry was mixed at low speed for 20 minutes.

| Material | Weight Ratio | Comments |
|---|---|---|
| Water | 24.5 | - |
| Deefo 495 | 2.7 | Antifoamer |
| Propylene Glycol | 10.0 | - |
| Texanol (Eastman Chemical Products) | 21.6 | Coalescent |
| Super Ad-It (Tenneco Chem. Inc.) | 1.0 | Preservative |
| Triton GR-7M (Rohm and Haas Co.) | 0.5 | Surfactant |
| Rhoplex AC-417 | 500.0 | Acrylic Latex |

Subsequently, the paint was thickened by post-addition of a 5% aqueous solution of the respective thickener and, if necessary, plain water, in amounts sufficient to bring the paint to constant viscosity (100 Krebs Units viscosity). The total of the solution and added water (where used) was 150 parts by weight (the paints all had a total of 1065.8 parts by weight). An untinted thickened white paint was formed.

Subsequently, color development was assessed using the finger rub-up method by dividing each sample into four parts, adding 1 g of a colorant to 50 g of untinted paint, then shaking for ten minutes on a paint shaker. Five mil (wet) films were cast for each paint on Leneta Form 1B Penopac charts. Portions of the wet films were finger rubbed (after 30 seconds drying time on unprimed substrate and 5 minutes drying time on primed substrate) until tacky to the touch.

The term "color development" is used to refer to the unwanted shading of a particular color from the same can of tinted latex paint when applied under different rates of shear (i.e., roller applied versus brush applied). Table 2 below provides color development values obtained for the above samples. Relative values of zero (no color change after rubbing) though 5 (maximum color change) were assigned. Negative or positive signs indicate a lighter or darker coloration (compared to unrubbed portion of the film) respectively. Accordingly, values of zero represent excellent color development properties (i.e., no tint contrast or shading) while values of five (positive or negative) represent the worst color development properties (maximum shading or tint contrast).

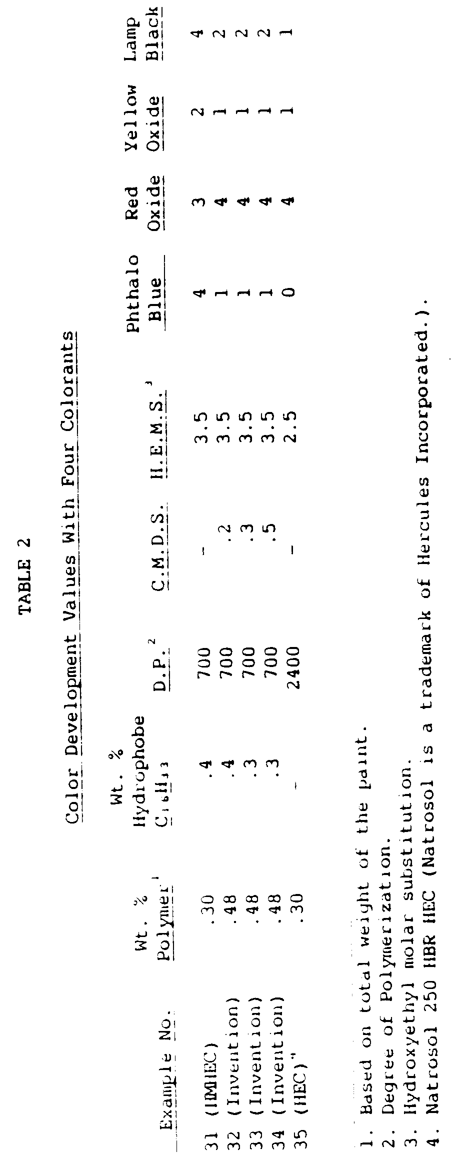

As can be seen in Table 2, CMHMHEC provides dramatically improved color development properties over HMHEC. In fact, results obtained with CMHMHEC are comparable to those obtained with HEC, which is the industry standard. These benefits are provided without sacrifice of any of the other benefits that hydrophobically modified water-soluble polymers provide as thickeners in latex paints such as spatter resistance and improve high shear viscosity.

When used as a thickener in paint, CMHMHEC produces similar gloss properties to HEC and superior gloss properties to HMHEC.

The modified cellulose ethers of this invention are useful as noted above and as stabilizers in emulsion polymerization, as thickeners in cosmetics and shampoos, and as flocculants in mineral processing. Very small amounts of low molecular weight modified cellulose ethers of this invention can out-perform larger quantities of higher molecular weight conventional cellulose ethers.

## Claims

1. A water-soluble cellulose ether derivative that has attached to it a long-chain alkyl group as a hydrophobic modifier is characterized in that the cellulose ether derivative is
- an anionic carboxymethyl hydroxyethyl derivative,
- the carboxymethyl degree of substitution is from 0.05 to 0.5,
- the hydroxyethyl molar substitution is 2.5 to 4.5,
- the long-chain alkyl group is a long-chain alkyl, alphahydroxyalkyl, or acyl group having 8 to 25 carbon atoms and represents in the polymer structure a proportion by weight of the total cellulose polymer of from 0.10 to 4.0%,
- further characterized in that it has a Brookfield LVF Viscosity in the range of 5 to 60,000 m Pa.s (centipoise) in a 1% by weight solution at 6 rpm.

2. A water-soluble cellulose ether derivative as claimed in claim 1, further characterized in that the carboxymethyl degree of substitution is 0.05 to 0.2.

3. A water-soluble cellulose ether derivative as claimed in any of the preceding claims, further characterized in that the long-chain hydrocarbon group has 8 to 18 carbon atoms and represents a proportion by weight of the fully substituted total cellulose polymer of from about 0.2 to 2.5%.

4. A process for making a water-soluble hydroxyethyl cellulose ether derivative as claimed in claim 1, in which a long-chain alkyl group containing halide or halohydride, an epoxide, or an acid anhydride or acyl chloride reactant group is reacted with a hydroxyethyl cellulose ether characterized in that the alkyl group has from 8 to 25 carbon atoms, and the product of the reaction is carboxymethylated to a carboxymethyl degree of substitution from 0.05 to 0.5.

5. A process for making a water-soluble cellulose ether derivative according to claim 1 in which a cellulose furnish is reacted in an alkaline reaction medium with an alkylene oxide, a hydroxyethylation group and a long-chain alkyl group containing halide or halohydride, an epoxide, or an acid anhydride or acyl chloride reactant group, characterized in that the alkyl group has from 8 to 25 carbon atoms, and the cellulose furnish is also reacted with a carboxymethylation group to a carboxymethyl degree of substitution from 0.05 to 0.5.

6. Use of the water-soluble cellulose ether derivative as claimed in claim 1, in an aqueous protective coating composition containing from about 0.1 to about 2.0% of the cellulose ether derivative.

## Patentansprüche

1. Wasserlösliches Celluloseetherderivat mit einer daran angebundenen langkettigen Alkylgruppe als einem hydrophoben modifizierenden Mittel, dadurch gekennzeichnet, daß das Celluloseetherderivat aus einem anionischen Carboxymethylhydroxyethylderivat besteht,
der Carboxymethylsubstitutionsgrad 0,05 bis 0,5 beträgt,
die molare Hydroxyethylsubstitution 2,5 bis 4,5 beträgt,
die langkettige Alkylgruppe aus einer langkettigen Alkyl-, alpha-Hydroxyalkyl- oder Acylgruppe mit 8 bis 25 Kohlenstoffatomen besteht und in der Polymerstruktur einen gew.-prozentualen Anteil an dem Gesamtcellulose-polymer von 0,10 bis 4,0% ausmacht,
des weiteren dadurch gekennzeichnet, daß es eine Brookfield LVF-Viskosität im Bereich von 5 bis 60.000 mPa·s (centipoise) in einer 1 gew.-%igen Lösung bei 6 U/min aufweist.

2. Wasserlösliches Celluloseetherderivat nach Anspruch 1, des weiteren dadurch gekennzeichnet, daß der Carboxymethylsubstitutionsgrad 0,05 bis 0,2 beträgt.

3. Wasserlösliches Celluloseetherderivat nach einem der vorhergehenden Ansprüche, des weiteren dadurch gekennzeichnet, daß die langkettige Kohlenwasserstoffgruppe 8 bis 18 Kohlenstoffatome aufweist und einen gew.-prozentualen Anteil an dem vollständig substituierten gesamten Cellulosepolymer von etwa 0,2 bis 2,5% ausmacht.

4. Verfahren zur Herstellung eines wasserlöslichen Hydroxyethylcelluloseetherderivats nach Anspruch 1, bei dem eine langkettige Alkylgruppe mit einer reaktiven Gruppe in Form eines Halogenids oder Halogenhydrids, eines Epoxids oder eines Säureanhydrids oder Acylchlorids mit einem Hydroxyethylcelluloseether umgesetzt wird, dadurch gekennzeichnet, daß die Alkylgruppe 8 bis 25 Kohlenstoffatome aufweist und das Reaktionsprodukt auf einen Carboxymethylsubstitutionsgrad von 0,05 bis 0,5 carboxymethyliert wird.

5. Verfahren zur Herstellung eines wasserlöslichen Celluloseetherderivats nach Anspruch 1, bei dem eine Cellulosebeschickung in einem alkalischen Reaktionsmedium mit einem Alkylenoxid, einer Hydroxyethylierungsgruppe und einer langkettigen Alkylgruppe mit einer reaktiven Gruppe in Form eines Halogenids oder Halogenhydrids, eines Epoxids oder eines Säureanhydrids oder Acylchlorids umgesetzt wird, dadurch gekennzeichnet, daß die Alkylgruppe 8 bis 25 Kohlenstoffatome aufweist und die Cellulosebeschickung ferner mit einer Carboxymethylierungsgruppe auf einen Carboxymethylsubstitutionsgrad von 0,05 bis 0,5 umgesetzt wird.

6. Verwendung des wasserlöslichen Celluloseetherderivats nach Anspruch 1 in einer wäßrigen Schutzbeschichtungszusammensetzung mit etwa 0,1 bis etwa 2,0% des Celluloseetherderivats.

## Revendications

1. Dérivé d'éther de cellulose soluble dans l'eau, auquel est fixé un groupe alkyle à longue chaîne en tant que modifiant hydrophobe, caractérisé en ce que le dérivé d'éther de cellulose est
- un dérivé carboxyméthylhydroxyéthylique anionique,
- le degré de substitution du groupe carboxyméthyle est de 0,05 à 0,5,
- le degré de substitution molaire du groupe hydroxyéthyle est de 2,5 à 4,5,
- le groupe alkyle à longue chaîne est un groupe alkyle, α-hydroxyalkyle ou acyle à longue chaîne ayant de 8 à 25 atomes de carbone et représente, dans la structure polymère, une quantité de 0,10 à 4,0 % en poids par rapport à la totalité du polymère de cellulose,
- caractérisé en outre en ce qu'il a une viscosité Brookfield LVF comprise entre 5 et 60 000 Pa.s (centipoises) en solution à 1 % en poids à 6 t/min.

2. Dérivé d'éther de cellulose soluble dans l'eau selon la revendication 1, caractérisé en outre en ce que le degré de substitution du groupe carboxyméthyle est de 0,05 à 0,2.

3. Dérivé d'éther de cellulose soluble dans l'eau selon l'une quelconque des revendications précédentes, caractérisé en outre en ce que le groupe hydrocarboné à longue chaîne a de 8 à 18 atomes de carbone et représente d'environ 0,2 à 2,5 % en poids de la totalité du polymère de cellulose entièrement substitué.

4. Procédé pour fabriquer un dérivé d'éther d'hydroxyéthylcellulose soluble dans l'eau selon la revendication 1, dans lequel on fait réagir un groupe alkyle à longue chaîne contenant un halogénure ou un halogènhydrate, un époxyde, ou encore un groupe réactif anhydride d'acide ou chlorure d'acyle, avec un éther d'hydroxyéthylcellulose, caractérisé en ce que le groupe alkyle a de 8 à 25 atomes de carbone, et que le produit de la réaction est carboxyméthylé jusqu'à un degré de substitution du groupe carboxyméthyle de 0,05 à 0,5.

5. Procédé pour fabriquer un dérivé d'éther de cellulose soluble dans l'eau selon la revendication 1, dans lequel on fait réagir une composition de fabrication à base de cellulose, dans un milieu réactionnel alcalin, avec un oxyde d'alkylène, un groupe d'hydroxyéthylation et un groupe alkyle à longue chaîne contenant un halogénure ou un halogènhydrate, un époxyde ou un groupe réactif anhydride d'acide ou chlorure d'acyle, caractérisé en ce que le groupe alkyle a de 8 à 25 atomes de carbone, et dans lequel on fait aussi réagir la composition de fabrication à base de cellulose avec un groupe de carboxyméthylation jusqu'à arriver à un degré de substitution du groupe carboxyméthyle de 0,05 à 0,5.

6. Utilisation du dérivé d'éther de cellulose soluble dans l'eau selon la revendication 1, dans une composition de revêtement protectrice aqueuse contenant d'environ 0,1 à environ 2,0 % du dérivé d'éther de cellulose.
